(19) Europäisches Patentamt
European Patent Office
Office européen des brevets

(11) **EP 3 169 913 B1**

(12) **EUROPÄISCHE PATENTSCHRIFT**

(45) Veröffentlichungstag und Bekanntmachung des Hinweises auf die Patenterteilung:
**18.04.2018 Patentblatt 2018/16**

(21) Anmeldenummer: **16712781.0**

(22) Anmeldetag: **18.03.2016**

(51) Int Cl.:
*F16H 49/00* *(2006.01)* *F16H 55/08* *(2006.01)*
*F16H 57/04* *(2010.01)*

(86) Internationale Anmeldenummer:
**PCT/EP2016/056021**

(87) Internationale Veröffentlichungsnummer:
**WO 2016/146831 (22.09.2016 Gazette 2016/38)**

(54) **WELLGETRIEBE MIT TROCKENLAUF**

HARMONIC DRIVE WITH DRY RUN

ENGRENAGE HARMONIQUE À FONCTIONNEMENT À SEC

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.03.2015 DE 102015104135**

(43) Veröffentlichungstag der Anmeldung:
**24.05.2017 Patentblatt 2017/21**

(73) Patentinhaber: **Harmonic Drive AG**
**65555 Limburg a.d. Lahn (DE)**

(72) Erfinder:
• **JANSSON, Markus**
**56244 Vielbach (DE)**
• **KOENEN, Johannes Petrus**
**65555 Limburg/Lahn (DE)**
• **ZENS, Frank**
**65582 Diez (DE)**

(74) Vertreter: **Müller, Eckhard**
**Mühlstrasse 9a**
**65597 Hünfelden-Dauborn (DE)**

(56) Entgegenhaltungen:
**DE-A1-102008 044 109** **JP-A- S59 113 341**
**JP-A- S60 231 047** **SU-A1- 484 335**
**US-A- 4 934 212** **US-B1- 6 526 849**

EP 3 169 913 B1

**Beschreibung**

Die Erfindung betrifft ein Wellgetriebe nach dem Oberbegriff des Patentanspruchs 1.

Derartige Wellgetriebe werden in vielfältiger Weise in vielen Technologiebereichen eingesetzt. Hinsichtlich der Funktionsweise derartiger Wellgetriebe sei beispielhaft hier auf das Harmonie Drive® Getriebe verwiesen, welches zur Gruppe der Wellgetriebe gehört und dessen Funktionsweise beispielhaft unter http://harmonicdrive.de/technologie/harmonic-drive-wellgetriebe/ beschrieben ist.

Das dort als elliptischer Wave Generator (Wellgenerator) ausgebildete Antriebsbauteil verformt über ein Kugellager das als außenverzahnter Flexspline ausgebildete Übertragungsbauteil, welches sich in den gegenüberliegenden Bereichen der großen Ellipsenachse mit dem innenverzahnten, als Circular Spline ausgebildeten Rad im Eingriff befindet. Mit Drehen des Wave Generators verlagert sich die große Ellipsenachse und damit der Zahneingriffsbereich. Da der Flexspline des Harmonie Drive® Getriebes zwei Zähne weniger als der Circular Spline besitzt, vollzieht sich während einer halben Umdrehung des Wave Generators eine Relativbewegung zwischen Flexspline und Circular Spline um einen Zahn und während einer ganzen Umdrehung um zwei Zähne. Bei fixiertem Circular Spline dreht sich der Flexspline als Abtriebselement entgegengesetzt zum Antrieb. Der Circular Spline kann dabei in einem Lagerring fixierbar angeordnet sein.

Besonders vorteilhaft ist, dass Harmonie Drive® Getriebe über ihre gesamte Lebensdauer keine Spielzunahme in der Verzahnung aufweisen und eine hervorragende Positioniergenauigkeit von weniger als einer Winkelminute und eine Wiederholgenauigkeit von nur wenigen Winkelsekunden besitzen. Zudem sind Harmonie Drive® Getriebe wesentlich kompakter und leichter als konventionelle Getriebe, sodass sie prädestiniert für den Einsatz in der Robotik, Prothetik und dergleichen technische Gebiete sind, bei denen Drehbewegungen auf kleinstem Raum realisiert werden müssen. Da die Kraftübertragung über einen großen Zahneingriffsbereich erfolgt, können Harmonie Drive® Getriebe höhere Drehmomente als konventionelle Getriebe übertragen. Mit nur drei Bauteilen werden Untersetzungen von 30:1 bis 320:1 in einer Stufe erreicht. Im Nennbetrieb werden Wirkungsgrade bis zu 85 % erreicht. Harmonie Drive® Getriebe sind nicht selbsthemmend und weisen kein Stick-Slip-Verhalten auf. Weiterhin weisen Harmonie Drive® Getriebe über den gesamten Drehmomentbereich eine hohe Torsionssteifigkeit mit nahezu linearer Kennlinie auf. Zudem bieten Harmonie Drive® Getriebe die Möglichkeit einer zentralen Hohlwelle. Kabel, Wellen, Laserstrahlen usw. können so auf einfache Weise durch die Hohlwelle geführt werden. Harmonie Drive® Getriebe zeichnen sich durch eine hohe Zuverlässigkeit und lange Lebensdauer aus.

Allerdings ist bei den gattungsgemäßen Wellgetrieben eine gezielte Auslegung für den Trockenlauf derzeit nicht etabliert. Im Bedarfsfall werden daher Wellgetriebe, welche eigentlich mit einer Fettschmierung ausgestattet werden, auch für den Betrieb mit tribologisch wirksamen Schichten eingesetzt. Um dabei dennoch eine Verlängerung der möglichen Betriebsdauer zu erreichen, werden abweichend von fettgeschmierten Wellgetrieben derartige Wellgetriebe spielbehaftet ausgeführt. Eine derartige spielbehaftete Ausführung des Wellgetriebes erfolgt durch eine Profil- beziehungsweise Konturverschiebung der Innenverzahnung des Rades beziehungsweise des Circular Splines. Allerdings ist dabei diese Profil- beziehungsweise Konturverschiebung derart ausgestaltet, dass auch nach dem Aufbringen der Beschichtung ein dauerhaftes Spiel in der Verzahnung der Außenverzahnung des Übertragungsbauteils beziehungsweise des Flexsplines und der Innenverzahnung des Rades beziehungsweise des Circular Splines nicht ausgeschlossen werden kann. Daher kann bei einer derartigen Vorgehensweise eine Vorspannung des Wellgetriebes nach dessen Montage nicht gewährleistet werden.

Aus der DE 10 2004 034 823 A1 ist eine Wellengetriebevorrichtung bekannt, bei der zum Zwecke der Steigerung eines Sperrmomentes mit hohem Untersetzungsverhältnis die Zahnprofilform der ineinander greifenden Zähne eines starren Innenzahnrades und eines flexiblen Außenzahnrades vorgeschlagen wird. Dabei sind die Zahnprofile der Zahnräder zunächst in einer sogenannten Grund-Zahnstangenprofilform definiert. Die unteren Teile der Zahnfußbereiche dieser Zahnprofile, d.h. die Bereiche, in denen keine Berührung der Zähne miteinander stattfindet, werden von Kurven $C2$ und $C3$ mit Eingriffswinkel $\alpha_2$ und $\alpha_3$ derart modifiziert, dass diese kleiner sind als der Standard-Eingriffswinkel $\alpha_1$ der Grund-Zahnstangenprofilform $C1$.

Aus der DD 244 796 A1 ist eine Verzahnung an Wellgetrieben, insbesondere mit topfförmigem elastischem Rad bekannt. Ziel des dort offenbarten Gegenstands ist es, die Montage von Wellgetrieben zu vereinfachen und den Verschleiß zu senken, sowie die Lebensdauer des Getriebes zu erhöhen. Dazu wird vorgesehen, das Wellgetriebe so auszugestalten, dass die Verzahnung, also die Zähne jedes Zahnpaares der gleichzeitig im Eingriff befindlichen Zahnpaare unter Last nahezu parallel zueinander zu liegen kommen, wodurch eine gleichmäßigere Breitenlastverteilung der Zähne entstehen soll. Ein in entspanntem Zustand zylindrisch geformtes, elastisches Rad ist dazu mit einer kegelförmig geformten Verzahnung versehen, die im montierten Zustand in eine, bezogen auf die Drehachse des Wellgetriebes zylindrisch geformte Innenverzahnung des starren Rades eingreifen soll. Im montierten Zustand wird das elastische Rad durch den eingeschobenen Wellengenerator aufgespreizt, so dass sich dessen offenes Ende aufbiegt und die Verzahnungen in einen parallel zueinander verlaufenden Eingriff kommen. Der Wellengenerator ist dabei um eine Einstecktiefe versetzt innerhalb des elastischen Rades angeordnet.

Aus der DE 10 2008 044 109 A1 ist ein Wellgetriebe bekannt, bei dem die Außenverzahnung einer radial flexiblen Abrollbuchse mit einem Schmiermittel beschichtet ist, das mit Feststoffpartikeln angereichert ist, die aus einem Gleiteigenschaften aufweisenden Kunststoff bestehen und elastisch oder plastisch verformbar sind.

Aus den Druckschriften JP S59 113341 A und SU 484 335 A1 sind Wellgetriebe bekannt, in welchen das Lager als zumindest teilweise außerhalb der Projektion der Innenverzahnung angeordnet ist.

Die gattungsgemässe JP S59 113341 A offenbart ein Wellgetriebe mit einer Drehachse, einem Antriebsbauteil, einem mit einer Innenverzahnung versehenen Rad und einem in dem Rad angeordneten und mit einer Außenverzahnung versehenen elastischen Übertragungsbauteil, wobei das Übertragungsbauteil auf das Antriebsbauteil aufgesteckt und durch das Antriebsbauteil derart elliptisch verformt ist, dass die Außenverzahnung des Übertragungsbauteils in gegenüberliegenden Bereichen einer großen Ellipsenachse mit der Innenverzahnung des Rades in Eingriff ist, wobei das Übertragungsbauteil topfförmig ausgebildet ist und wobei das Antriebsbauteil im Bereich der großen Ellipsenachse an einem Lager an dem Übertragungsbauteil angreift.

Die JP S60 231 047 A offenbart ein Wellgetriebe, bei welchem das den Wellgenerator umgebene Lager praktisch zweiteilig ausgeführt ist, wobei das zweite Lager außerhalb der Projektion der Innenverzahnung des Rades angeordnet ist.

Die US 6,526,849 B1 offenbart ein Wellgetriebe mit einer besonderen Zahnform, welche zum Ziel hat, ein Überratschen der Verzahnung zu vermeiden. Um dies zu erreichen, wird quasi ein Zahneingriff mit allen Zähnen gleichzeitig angestrebt.

Es ist daher Aufgabe der Erfindung, ein Wellgetriebe der eingangs genannten Art derart weiterzubilden, dass eine Vorspannung des montierten Getriebes auch bei Wellgetrieben für den Trockenlauf gewährleistet ist. Dabei soll allerdings nicht auf wesentliche vorteilhafte Produktmerkmale der fettgeschmierten Wellgetriebe, wie beispielsweise Spielfreiheit und eine hohe Überlastfähigkeit des Wellgetriebes, verzichtet werden.

In diesem Zusammenhang bezieht sich der Begriff "Überlastfähigkeit" auf für das Wellgetriebe vorgesehene Lastzustände, die das Wellgetriebe ohne unzulässige Verformung oder Beschädigung durchlaufen kann, die aber deutlich über die Belastung im Normalbetrieb hinausgehen.

Gelöst wird diese Aufgabe durch ein Wellgetriebe mit den Merkmalen des Patentanspruchs 1. Vorteilhafte Ausgestaltungen der Erfindung finden sich in den Unteransprüchen.

Das erfindungsgemäße Wellgetriebe besteht im Wesentlichen aus einem Antriebsbauteil, einem mit einer Innenverzahnung versehenen Rad und einem in dem Rad angeordneten und mit einer Außenverzahnung versehenen elastischen Übertragungsbauteil. Das Übertragungsbauteil ist auf das Antriebsbauteil aufgesteckt und wird durch das Antriebsbauteil derart elliptisch verformt, dass die Außenverzahnung des Übertragungsbauteils in gegenüberliegenden Bereichen einer großen Ellipsenachse mit der Innenverzahnung des Rades in Eingriff ist beziehungsweise mit diesem kämmt. Das Übertragungsbauteil ist topfförmig ausgebildet und läuft von einem die Außenverzahnung aufweisenden ersten Topfende zu einem zweiten Topfende konisch zusammen. Dabei greift das Antriebsbauteil im Bereich der großen Ellipsenachse an einem Lager an dem Übertragungsbauteil an.

Gemäß der Erfindung sind die Kontur der Innenverzahnung des Rades und die Kontur der Außenverzahnung des Übertragungsbauteils derart ausgestaltet, dass der Bereich zur Drehmomentübertragung im Normalbetrieb am Zahnkopf der Kontur der Außenverzahnung des Übertragungsbauteils angeordnet ist, sodass kein Kontakt der beiden Konturen im Fußbereich der Außenverzahnung vorliegt.

Zusätzlich kann das Lager außerhalb einer Projektion der Innenverzahnung des Rades senkrecht zur Richtung der Drehachse des Wellgetriebes liegen. Dadurch, dass das Lager außerhalb einer Projektion der Innenverzahnung des Rades senkrecht zur Richtung der Drehachse des Wellgetriebes liegt, ist eine Reduktion der radialen Steifigkeit des Wellgetriebes insbesondere im Kontaktbereich der Innenverzahnung des Rades und der Außenverzahnung des Übertragungsbauteils gegeben. Dieser erfindungsgemäße Vorteil wird in erster Linie dadurch erreicht, dass im Vergleich zu Standardwellgetrieben eine wesentlich tiefere Anordnung des Antriebsbauteils im topfförmigen Übertragungsbauteil möglich wird. Dadurch erfolgt eine Rückbiegung des Übertragungsbauteils im Bereich der Außenverzahnung bei der Montage des Rades auf dieses Übertragungsbauteil. Hierdurch entstehen in der Verzahnung des Übertragungsbauteils und der Innenverzahnung des Rades selbst dann Kontaktkräfte, wenn kein äußeres Moment am Wellgetriebe anliegt. In Folge der tieferen Anordnung des Antriebsbauteils im topfförmigen Übertragungsbauteil ändern sich nämlich die Hebelverhältnisse innerhalb des Wellgetriebes. Dadurch, dass das Lager, an welchem sich das Antriebsbauteil an dem Übertragungsbauteil abstützt, tiefer im topfförmigen Übertragungsbauteil angeordnet ist, werden nämlich die Kräfte, die durch die Rückbiegung des Übertragungsbauteils in der Verzahnung entstehen bei unveränderter radialer Verformung des Übertragungsbauteils im Vergleich zu Wellgetrieben nach dem Stand der Technik verringert.

Besonders vorteilhaft ist es, wenn sich nicht nur das Lager außerhalb der Projektion der Innenverzahnung des Rades senkrecht zur Richtung der Drehachse des Wellgetriebes befindet, sondern das gesamte Antriebsbauteil. Das Antriebsbauteil weist dabei einen elliptisch geformten Wellgenerator auf, der vorzugsweise von dem Lager umgeben ist. Dabei ist das Lager vorzugsweise in axialer Überdeckung, d.h. in Projektion senkrecht zur Richtung der Drehachse des Wellgetriebes, auf dem Antriebsbauteil angeordnet.

In Weiterbildung der Erfindung weist das Übertragungsbauteil eine Wandstärke und im unmontierten Zustand im Bereich der Außenverzahnung einen Innendurchmesser auf, wobei das Verhältnis des Innendurchmessers zur Wandstärke kleiner als 0,007 ist. Durch diese Ausgestaltung des Übertragungsbauteils wird der Effekt der Reduktion der radialen Steifigkeit des Wellgetriebes, insbesondere im Kontaktbereich der Außenverzahnung des Übertragungsbauteils und der Innenverzahnung des Rades, nochmals erhöht. Dabei ist zu berücksichtigen, dass unter der Wandstärke des Übertragungsbauteils auch die Dicke des Zahnfußkranzes des Übertragungsbauteils verstanden werden soll. Im Bereich dieses Zahnfußkranzes ist die Außenverzahnung des Übertragungsbauteils angeordnet.

Durch diese erfindungsgemäße Modifikationen wird eine Verringerung der Pressung in Folge der Getriebevorspannung insbesondere in der Verzahnung der Außenverzahnung des Übertragungsbauteils und der Innenverzahnung des Rades erreicht. Aufgrund der verringerten radialen Steifigkeit wird zudem die Abhängigkeit der Kontaktdrücke von Fertigungstoleranzen und/oder - abweichungen reduziert. Da die erreichbare Betriebsdauer wesentlich von den Pressungen in dieser Verzahnung bestimmt wird, führt dies zu einer Steigerung der Betriebsdauer und zu einer Reduktion der Abhängigkeit zwischen Fertigungsgenauigkeit und Betriebsdauer. Erfindungsgemäß ist dabei das Wellgetriebe sowohl mit Spielfreiheit als auch einer hohen Überlastfähigkeit ausgestattet.

In Weiterbildung der Erfindung kann vorgesehen sein, dass das Lager eine größere Länge in Richtung der Drehachse aufweist als die Innenverzahnung des Rades oder des Rades selbst. Durch diese Ausgestaltung kann die gewünschte Änderung der oben genannten Hebelverhältnisse innerhalb des Wellgetriebes noch besser hervorgerufen werden.

Vorzugsweise kann vorgesehen sein, dass das Rad eine ringförmige Ausnehmung aufweist, durch welche die Länge der Innenverzahnung in Richtung der Drehachse kürzer bzw. kleiner ausgebildet ist als die Gesamtlänge des Rades in Richtung der Drehachse. Diese Bauweise erlaubt, das Rad massiver auszuführen und gleichzeitig die Vorteile einer axial verkürzten Innenverzahnung auszunutzen.

Nach einer Ausgestaltung der Erfindung kann vorgesehen sein, dass die Innenverzahnung in Richtung der Drehachse eine kleinere Erstreckung aufweist als die Außenverzahnung des Übertragungsbauteils.

Als besonders vorteilhaft hat sich eine mögliche Variante der Erfindung herausgestellt, nach der die Symmetrieachse des Lagers außerhalb der Projektion der Innenverzahnung des Rades liegt. Die Symmetrieachse des Lagers ist daher die Achse, die senkrecht zur Drehachse des Wellgetriebes verläuft und vorzugsweise durch den Mittelpunkt von in dem Lager geführten Wälzkörpern, insbesondere Kugeln, verläuft.

Es hat sich herausgestellt, dass mit einer solchen Anordnung des Lagers die Hebelverhältnisse auf eine besonders günstige Weise verändern.

Die erfindungsgemäße Aufgabe lässt sich bereitsallein durch die Modifikation des Zahnprofils der Außenverzahnung des Übertragungsbauteils und der Innenverzahnung des Rades erzielen. Dazu sind die Kontur der Innenverzahnung des Rades und die Kontur der Außenverzahnung des Übertragungsbauteils derart ausgestaltet, dass der Bereich zur Drehmomentübertragung im Normalbetrieb am Zahnkopf der Kontur der Außenverzahnung des Übertragungsbauteils angeordnet ist. Hierdurch liegt kein Kontakt der beiden Konturen im Fußbereich der Außenverzahnung des Übertragungsbauteils vor. Hierdurch wird der Bereich, der zur Übertragung des im Normalbetrieb geringen Betriebsdrehmomentes dient, in die Nähe des Zahnkopfes der Außenverzahnung des Übertragungsbauteils verschoben. Dabei erfolgt die Auslegung der Kontur der Innenverzahnung des Rades derart, dass im Bereich des Zahnfußes der Außenverzahnung des Übertragungsbauteils während des Zahneingriffs im Normalbetrieb kein Kontakt im Bereich dieses Zahnfußes der Außenverzahnung des Übertragungsbauteils vorliegt. Hierdurch wird eine deutliche Reduktion des Reibweges in der Verzahnung der Außenverzahnung des Übertragungsbauteils und der Innenverzahnung des Rades erreicht.

Ein Kontakt der Zahnflanken der Innenverzahnung des Rades und der Außenverzahnung des Übertragungsbauteils im Fußbereich der Außenverzahnung des Übertragungsbauteils erfolgt erst, nachdem die Außenverzahnung des Übertragungsbauteils gänzlich in die Lücke der Innenverzahnung des Rades eingetaucht ist. Dies tritt allerdings nur bei einer hohen externen Last, insbesondere bei einer Überlast, auf, welche eine entsprechend große Biegung der Zähne der Außenverzahnung des Übertragungsbauteils im Eingriffsbereich bewirkt. Hierdurch ist während des Normalbetriebes bei normaler Last ein minimaler Reibweg sichergestellt, während im Überlastfall die mit der Innenverzahnung des Rades in Eingriff stehenden Zähne der Außenverzahnung des Übertragungsbauteils über ihre gesamte Höhe die Last tragen.

Hierzu ist es nämlich vorgesehen, dass die Kontur der Innenverzahnung des Rades und die Kontur der Außenverzahnung des Übertragungsbauteils derart ausgestaltet sind, dass der Bereich zur Drehmomentübertragung im Überlastbetrieb am Zahnkopf der Kontur der Innenverzahnung des Rades angeordnet ist, sodass ein Kontakt der beiden Konturen im Fußbereich der Kontur der Außenverzahnung im Überlastbetrieb vorliegt.

Um die Reibungsverhältnisse nochmals zu optimieren, sind dabei die Kontur der Außenverzahnung des Übertragungsbauteils und/oder die Kontur der Innenverzahnung des Rades derart ausgebildet, dass der Zahnkopf der jeweiligen Kontur abgeflacht ist. Hierdurch ist vermieden, dass auch entsprechende Zahnköpfe einen zusätzlichen, nicht notwendigen Beitrag zur Reibung leisten.

Erfindungsgemäß kann es natürlich auch vorgesehen sein, dass die Innenverzahnung des Übertragungsbauteils und/oder die Außenverzahnung des Rades wenigstens im Bereich ihrer während des Betriebes des Wellgetriebes in Kontakt stehenden Zahnflanken mit einer tribologisch wirksamen Beschichtung versehen sind.

Dabei können als tribologisch wirksame Beschichtung beispielsweise diamantähnliche Kohlenstoff-Schichten verwendet werden.

Hinsichtlich einer weiteren Optimierung der Reibungsverhältnisse des Wellgetriebes hat es sich als vorteilhaft erwiesen, dass ein Eingriffswinkel $\alpha$ von größer oder gleich 25° gegeben ist.

Unabhängig geschützt sein soll durch die Erfindung auch ein Getriebeeinbausatz mit einem zuvor beschriebenen Wellgetriebe.

Weitere Ziele, Vorteile, Merkmale und Anwendungsmöglichkeiten der vorliegenden Erfindung ergeben sich aus der nachfolgenden Beschreibung von Ausführungsbeispielen anhand der Figuren.

Es zeigen:

Figur 1    ein Ausführungsbeispiel des erfindungsgemäßen Wellgetriebes in montiertem Zustand in einer Draufsicht entlang einer Drehachse des Wellgetriebes,

Figur 2    eine Detaildarstellung eines Querschnitts eines Wellgetriebes nach dem Stand der Technik im Bereich einer Verzahnung,

Figur 3    eine Detaildarstellung eines Querschnitts eines erfindungsgemäßen Wellgetriebes im Bereich einer Verzahnung,

Figur 4    eine Detaildarstellung eines Querschnitts der Konturen der in Eingriff befindlichen Verzahnungen des erfindungsgemäßen Wellgetriebes in einem Lastfall,

Figur 5    eine Detaildarstellung eines Querschnitts der Konturen der in Eingriff befindlichen Verzahnungen des erfindungsgemäßen Wellgetriebes in einem anderen Lastfall,

Figur 6    eine Detaildarstellung eines Querschnitts eines erfindungsgemäßen Wellgetriebes im Bereich einer Verzahnung gemäß einem zweiten Ausführungsbeispiel mit schmal ausgeführtem Rad,

Figur 7    eine Detaildarstellung eines Querschnitts eines erfindungsgemäßen Wellgetriebes im Bereich einer Verzahnung gemäß einer dritten Ausführungsform mit abgesetztem Rad,

Figur 8    eine Detaildarstellung eines Querschnitts der Konturen der in Eingriff befindlichen Verzahnungen des erfindungsgemäßen Wellgetriebes in einem Lastfall und

Figur 9    eine Detaildarstellung eines Querschnitts der Konturen der in Eingriff befindlichen Verzahnungen des erfindungsgemäßen Wellgetriebes im gleichen Lastfall wie in den Figuren 8 und 4 gezeigt.

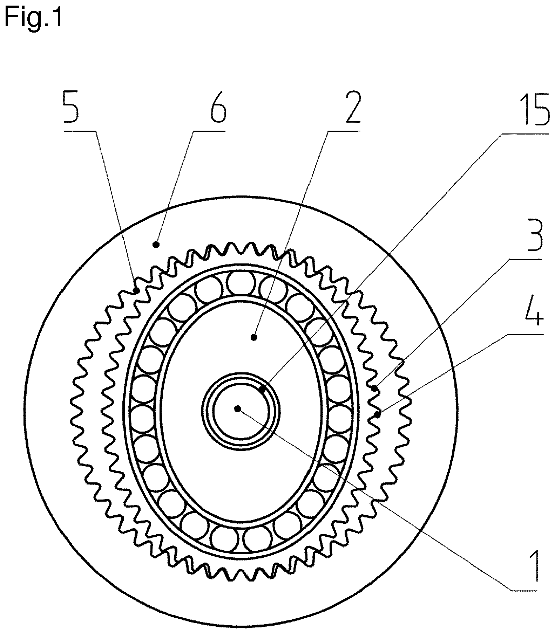

In der Figur 1 ist ein Ausführungsbeispiel des erfindungsgemäßen Wellgetriebes in montiertem Zustand in einer Draufsicht entlang einer Drehachse 1 des Wellgetriebes gezeigt. Dabei ist auf einem als elliptischer Wave-Generator ausgebildeten Antriebsbauteil 2, das auf einer Hohlwelle 15 gelagert ist, ein als Flexspline ausgebildetes Übertragungsbauteil 4 aufgesteckt, wobei das Übertragungsbauteil 4 durch das elliptische Antriebsbauteil 2 ebenfalls elliptisch verformt ist. Das elliptisch verformte Übertragungsbauteil 4 greift mit einer Außenverzahnung 3 in den gegenüberliegenden Bereichen der großen Ellipsenachse in eine Innenverzahnung 5 eines als Circular Spline ausgebildeten Rades 6 ein. In der Draufsicht gemäß Figur 1 unterscheidet sich das erfindungsgemäße Wellgetriebe im Wesentlichen nicht von den aus dem Stand der Technik bekannten Wellgetrieben.

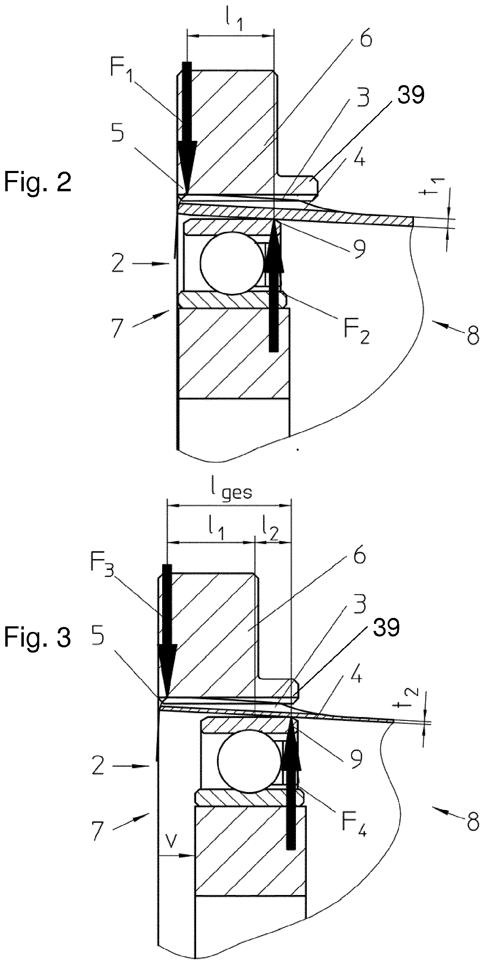

In den Figuren 2 und 3 sind nun Detaildarstellungen eines Querschnitts eines Wellgetriebes im Bereich der Verzahnung der Außenverzahnung 3 des Übertragungsbauteils 4 und der Innenverzahnung 5 des Rades 6 dargestellt. Dabei zeigt Figur 2 ein aus dem Stand der Technik bekanntes Wellgetriebe.

Die beiden Wellgetriebe der Figuren 2 und 3 weisen dabei im Wesentlichen das gleiche Rad 6, welches mit einer Innenverzahnung 5 versehen ist, auf. Die Innenverzahnung 5 des Rades 6 steht dabei im Bereich der großen Ellipsenachse, der in den Figuren 2 und 3 dargestellt ist, in Eingriff mit der Außenverzahnung 3 des Übertragungsbauteils 4, welches vorliegend topfförmig ausgebildet ist und ein erstes Topfende 7 und ein zweites Topfende 8 aufweist. Das Übertragungsbauteil 2 läuft dabei vom ersten Topfende 7 zum zweiten Topfende 8 hin zusammen, sodass sich die große Ellipsenachse vom ersten Topfende 7 zum zweiten Topfende 8 hin verkleinert.

In den beiden Wellgetrieben der Figuren 2, 3, 6 und 7 ist in dem topfförmigen Übertragungsbauteil 4 ein Antriebsbauteil 2 eingesetzt, welches das Übertragungsbauteil 4 elliptisch verformt. Dabei kann das Antriebsbauteil 2 als elliptische Scheibe ausgebildet sein, welche auf einer hier nicht dargestellten Hohlwelle 15 sitzt und über diese angetrieben wird.

Das Wellgetriebe der Figur 3 weist nunmehr zwei wesentliche Unterschiede zu dem Wellgetriebe der Figur 2 aus dem Stand der Technik auf.

Zum einen ist die Wanddicke $t_2$ des Wellgetriebes im Vergleich zu der Wanddicke $t_1$ des aus dem Stand der Technik bekannten Wellgetriebes gemäß Figur 2 deutlich verringert. Die Dimensionierung der Wanddicke ergibt sich dabei aus dem Verhältnis der Wanddicke $t_2$ zu dem Innendurchmesser des Übertragungsbauteils 4 im unmontierten Zustand, welches den Wert 0,007 nicht überschreiten soll, während das Verhältnis von Wandstärke $t_1$ des aus dem Stand der Technik bekannten Wellgetriebes gemäß Figur 2 und dem Innendurchmesser des dortigen Übertragungsbauteils einen Wert von 0,01 in der Regel nicht unterschreitet.

Zum anderen ist in der Figur 3 deutlich zu erkennen, dass das Antriebsbauteil 2 gegenüber der aus dem Stand der Technik gemäß Figur 2 bekannten Anordnung um eine Strecke v in Richtung des zweiten Topfendes 8 des Übertragungsbauteils 4 hin verschoben ist. Durch diese tiefere Anordnung des Antriebsbauteils 2 in dem topfförmigen Übertragungsbauteil 4 ändern sich die Hebelverhältnisse im Getriebe. Während der Hebel in dem aus dem Stand der Technik bekannten Wellgetriebe gemäß Figur 2 die Länge $l_1$ aufweist, ist die Länge $l_{ges}$ des Hebels im erfindungsgemäßen Getriebe gemäß Figur 3 in Folge der Verschiebung des Antriebsbauteils 2 um die Strecke v im Übertragungsbauteil 4 um den Wert $l_2$ vergrößert. Der Gesamtlänge $l_{ges}$ des Hebels ergibt sich daher zu der Länge $l_1$ plus die Länge $l_2$.

In Folge dieser besonderen Anordnung des Antriebsbauteils 2 im Übertragungsbauteil 4 ist die Hebelkraft $F_3$ im erfindungsgemäßen Getriebe im Vergleich zu der entsprechenden Hebelkraft $F_1$ bei dem aus dem Stand der Technik bekannten Getriebe gemäß Figur 2, welche durch die Rückbiegung des Übertragungsbauteils 4 im Bereich der Verzahnung der Außenverzahnung 3 des Übertragungsbauteils 4 und der Innenverzahnung 5 des Rades 6 entstehen, deutlich verringert. Dabei ist allerdings die Kraft $F_4$, die das Antriebsbauteil 2 im Bereich des Lagers 9 auf das Übertragungsbauteil 4 ausübt im Vergleich zu der entsprechenden Kraft $F_2$ bei dem Getriebe gemäß dem Stand der Technik im Wesentlichen unverändert. Dieser Effekt hinsichtlich der Kräfte wird dabei noch durch die zuvor beschriebene Verringerung der Wandstärke $t_2$ des Übertragungsbauteils verstärkt. Dabei ist unter der Wandstärke $t_2$ die gesamte Stärke des Übertragungsbauteils 4 im Topfbereich zu verstehen, also auch im Bereich des Fußkranzes, auf dem die Außenverzahnung 3 des Übertragungsbauteils 4 angeordnet ist.

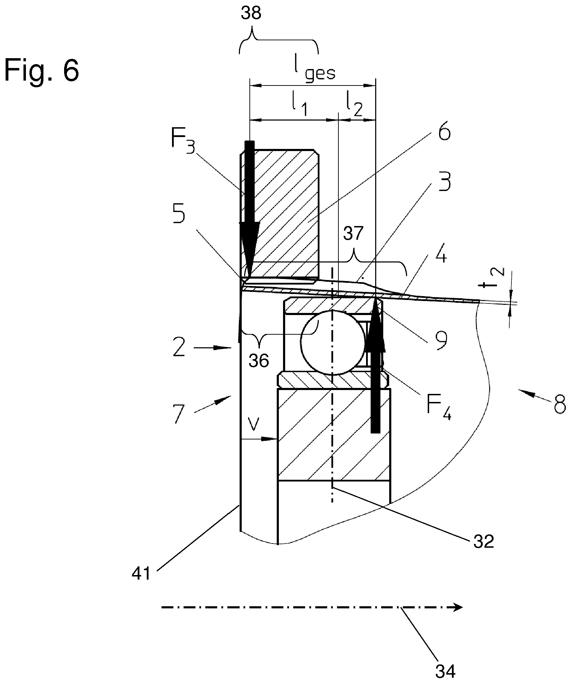

In der Figur 6 ist ein zweites Ausführungsbeispiel gezeigt. Darin ist die Länge 38 des Rades 6 in Richtung der Drehachse 34 gegenüber der Ausführungsform gemäß Figur 3 verringert, wobei die übrigen Bauteile gleich sind.

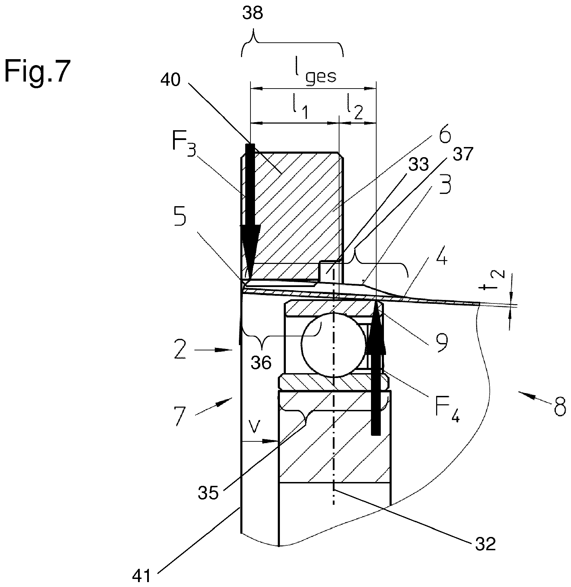

In der Figur 7 ist eine dritte Ausführungsform gezeigt, bei welcher die Länge 38 des Rades 6 in Richtung der Drehachse 34 an dessen Grundkörper 40 gleich ist wie bei der ersten Ausführungsform, jedoch ein Ansatz 39, der in der Ausführungsform der Figur 3 vorhanden ist, wegfällt. Zusätzlich ist eine Ausnehmung 33 an der Innenfläche des Rades 6 derart angeordnet, so dass die axiale Länge 36 der Innenverzahnung gegenüber der ersten Ausführungsform verkürzt ist.

Daraus ergibt sich bei der zweiten Ausführungsform gemäß Figur 6 und der dritten Ausführungsform gemäß Figur 7, dass das Lager 9 eine größere Länge 35 in Richtung der Drehachse aufweist als die Innenverzahnung 5 des Rades 6 bzw. als das Rad 6 selbst. Auf diese Weise wird der gewünschte Zahneingriff für den Trockenlauf des Wellgetriebes noch besser erreicht.

Bei den Ausführungsformen gemäß Figur 6 und 7 ist es im Übrigen so vorgesehen, dass sogar die Symmetrieachse 32 des Lagers 9 außerhalb der Projektion der Innenverzahnung 5 senkrecht zur Richtung 34 der Drehachse 1 vorliegt.

Bei den in den Figuren 6 und 7 gezeigten Ausführungsbeispielen ist es sogar möglich, die Strecke v gegenüber dem ersten Ausführungsbeispiel gemäß Figur 3 stark zu verringern oder sogar aufzuheben, so dass das Lager 9 sowie das Antriebsbauteil 2 in Richtung der Drehachse gegenüber einer Stirnfläche 41 des Wellgetriebes verschoben ist. Denn die unterschiedlichen Längen 36, 37 der Innenverzahnung 5 und der Außenverzahnung 3 für Hebelverhältnisse in den Wellgetrieben sind gegenüber dem Stand der Technik derart geändert, dass ein Trockenlauf des Wellgetriebes möglich ist.

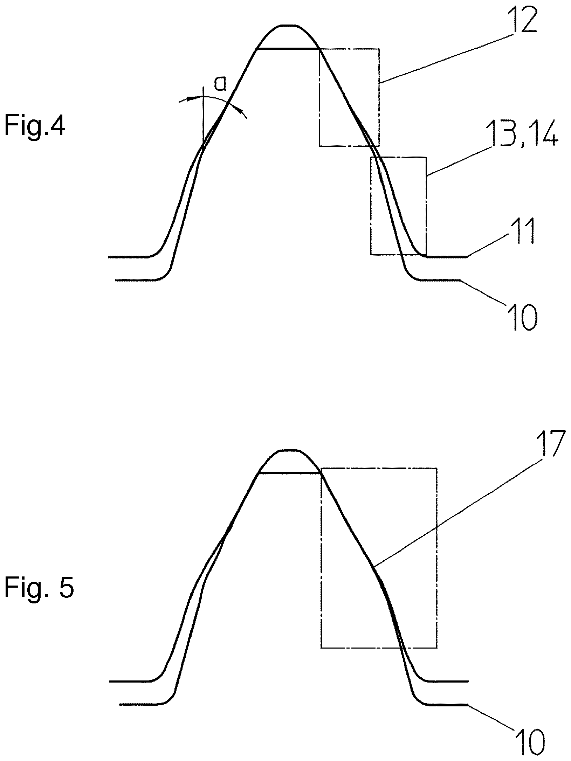

In der Figur 4 ist nunmehr eine Detaildarstellung eines Querschnitts der Konturen 10 und 11 der Zähne der Außenverzahnung 3 des Übertragungsbauteils 4 und der Innenverzahnung 5 des Rades 6 in einer in Eingriff befindlichen Position im Normalbetrieb dargestellt. Die Kontur 10 des Zahnes der Außenverzahnung 3 des Übertragungsbauteils 4 liegt dabei in seinem Kopfbereich 12 an der Kontur 11 eines Zahnes der Innenverzahnung 5 des Rades 6 an und bildet in diesem Bereich einen Eingriffswinkel $\alpha$, welcher in etwa den Wert 25° aufweist. Der Kopfbereich wird im Weiteren auch als Zahnkopf 12 bezeichnet und bezieht sich auf den in der Figur 4 gekennzeichneten Bereich.

Im Bereich des Zahnkopfes 13 des Zahnes der Innenverzahnung 5 des Rades 6 hat die Kontur 10 des Zahnes der Außenverzahnung 3 des Übertragungsbauteils 4 in seinem Fußbereich 14 im Normalbetrieb keinen Kontakt. Durch diese Anordnung der Konturen 10 und 11 der Zähne der Außenverzahnung 3 des Übertragungsbauteils 4 und der Innenverzahnung 5 des Rades 6 wird eine deutliche Reduktion des Reibweges in der Verzahnung zwischen Außenverzahnung 3 und Innenverzahnung 5 erreicht. Ein Kontakt der beiden Konturen 10 und 11 im Fußbereich 14 der Kontur 10 eines Zahnes der Außenverzahnung 3 erfolgt - wie in Figur 5 dargestellt - erst, nachdem dieser Zahn gänzlich in die Lücke zwischen zwei Zähnen der Innenverzahnung 3 des Rades 6 eingetaucht ist und eine hohe externe Last auftritt, die sich allerdings nur im Überlastfall durch eine entsprechend große Biegung des Zahnes der Außenverzahnung 3 bemerkbar macht. Dabei hat nunmehr die Außenverzahnung 3 des Zahnes Kontakt über einen Bereich 17, der sich sowohl über dessen Zahnkopf 12 als auch über dessen Fußbereich 14 erstreckt. Damit ist während des regulären Betriebes ein minimaler Reibweg bei Spielfreiheit sichergestellt, während im Überlastfall die Zähne der Außenverzahnung 3 und der Innenverzahnung 5 über ihre gesamte Höhe spielfrei die Last tragen.

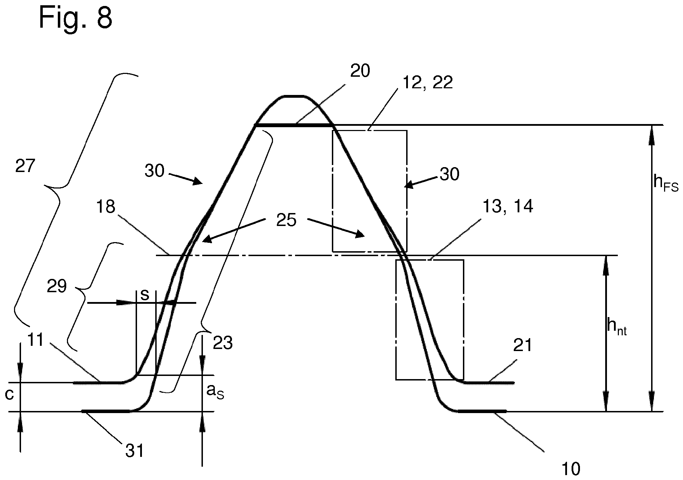

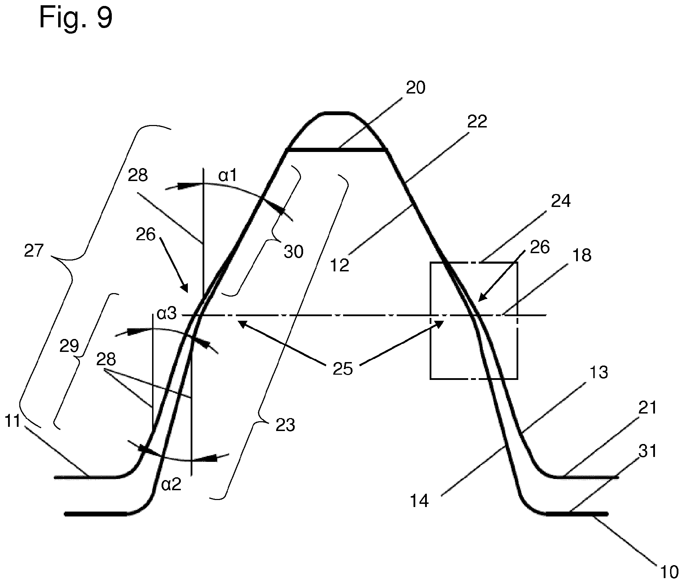

In den Figuren 8 und 9 ist die in den Figuren 4 und 5 beschriebene Zahnform mit weiteren Einzelheiten gezeigt. Die Kontur 10 der Außenverzahnung 3 und die Kontur 11 der Innenverzahnung 5 greifen dabei in einander, wobei bei dem in den Figuren 8 und 9 gezeigten Normalbetrieb ein Eingriff der jeweiligen Zahnflanken 23, 27 in dem Bereich 30 für die Drehmomentübertragung erfolgt. Dabei ist der jeweilige Zahn der Außenverzahnung 3 durch die Grenzlinie 18 in seinen Kopfbereich bzw. Zahnkopf 12 und den Fußbereich 14 unterteilt. Gleiches gilt für die Unterteilung des Zahnkopfes 13 der Innenverzahnung 5 und dem zugehörigen Fußbereich 22 der Innenverzahnung 5, welche durch die Grenzlinie 18 unterteilt sind. Im Zusammenspiel der beiden Verzahnungen 3, 5 ergibt sich im Normalbetrieb der Bereich 30 zur Drehmomentübertragung, in welchem der Zahnkopf 12 der Außenverzahnung an dem Fußbereich 22 der Innenverzahnung 5 anliegt und ein davon separater, im Normalbetrieb nichttragender Bereich 29, in welchem kein Kontakt der beiden Konturen 10, 11 vorliegt. Der fehlende Kontakt der beiden Konturen 10, 11 kann auch durch ein sogenanntes Flankenspiel s definiert werden, welches in einem Abstand $a_s$ von einem Zahngrund 31 der Außenverzahnung gemessen wird, wie dies in Figur 8 dargestellt ist. Der Abstand $a_s$ beträgt etwa das 1,5-fache eines Kopfspiels c, welches als Abstand zwischen dem Zahngrund 31 und dem Kopfende 21 der Innenverzahnung definiert ist.

Das Flankenspiel s beträgt maximal das 0,35-fache, vorzugsweise maximal das 0,3-fache des Moduls m der Verzahnung, wobei der Modul m der Verzahnung definiert ist durch

$$m = \frac{p}{\pi} = \frac{d_T}{z}$$

dabei ist $d_T$ = Teilkreisdurchmesser; z = Zähnezahl; p = Zahnradteilung; $\pi$ = Kreiszahl. Auf diese Weise ergibt sich eine Beabstandung der Zahnflanke 23 der Außenverzahnung 3 zu der Zahnflanke 27 der Innenverzahnung 5 in dem am Fußbereich 14 der Außenverzahnung 3 und im Kopfbereich der Innenverzahnung 5 im Normalbetrieb vorliegenden, nichttragenden Bereich 29. In diesem Bereich laufen die Konturen 10, 11 der Außenverzahnung 3 bzw. der Innenverzahnung 5 zu einem Übergangsbereich 24 zusammen.

Dadurch ergibt sich ein Eingriffsverhalten, bei welchem mit zunehmender Belastung, und damit bei der Verbiegung des Zahnes der Außenverzahnung, sich die Zahnflanken 23, 27 der Außenverzahnung 3 und der Innenverzahnung 5 in dem Bereich 29 sukzessive aneinander schmiegen, sodass sich der Bereich 30 zur Drehmomentübertragung zum Zahngrund 31 bzw. zum Kopfende der Innenverzahnung 5 hin vergrößert und der Zahn auf diese Weise eine größere Belastung tragen kann.

Zur Unterstützung des Anschmiegens der Zahnflanken 23 und 27 aneinander weisen sowohl die Innenverzahnung 5 als auch die Außenverzahnung 3 jeweils einen Übergang 26, 25 auf, in denen vorzugsweise durch eine Verrundung die unterschiedlichen Steigungen der Zahnflanken 23, 27 jeweils am Zahnkopf 12, 13 und gegenüber dem Fußbereich 14, 22 ausgeglichen werden. Diese Verrundungen an den Übergängen 25, 26 sind vorzugsweise gekrümmt ausgebildet, wobei die Krümmungen gleichsinnig erfolgen und die Zahnflanken 23, 27 sich auch in dem Übergangsbereich 24 aneinander schmiegen können. Durch die gleichsinnig gekrümmten Übergänge können etwaig auftretende Kerbwirkungen oder lokale Spannungsspitzen vermieden oder zumindest auf ein zulässiges Maß herabgesetzt werden.

Der Abstand der Grenzlinie 18 vom Zahngrund 31, der auch als Höhe des nichttragenden Bereiches $h_{nt}$ bezeichnet werden kann und welcher in Richtung eines Lotes 28 gemessen wird, beträgt etwa das 0,25-fache bis 0,8-fache, insbesondere das 0,45-fache bis 0,75-fache der Zahnhöhe $h_{FS}$. Die Zahnhöhe $h_{FS}$ ist der Abstand zwischen dem Zahngrund 31 und dem Kopfende 20 der Außenverzahnung. Die Größen $h_{FS}$, $h_{nT}$ und c sind dabei als relative Größen zu verstehen.

Durch die vorstehend anhand der Figur 8 erläuterten geometrischen Eigenschaften der zueinander korrespondierenden Verzahnungen ergibt sich ferner, dass die Zahnflanken 23, 27 im Bereich 29 mit unterschiedlichen Winkeln zum Lot 28 verlaufen. Dabei verläuft die Innenverzahnung 5 an ihrem Zahnkopf 13 mit einem Winkel $\alpha_3$ von etwa 12° bis etwa 22°. Die Innenverzahnung 5 verläuft in ihrem Fußbereich 14 unter einem Winkel zum Lot 28 im Bereich von etwa 6° bis 12°.

Die Lotrichtung 28 ist dabei eine zur Radialrichtung der Verzahnung parallel verlaufende Richtung.

Der in der Figur dargestellte Winkel $\alpha_1$ ist größer oder gleich 25° zum Lot 28, wie auch der weiter oben beschriebene Winkel $\alpha$.

Aus den Winkelverhältnissen ergibt sich, dass die Zahnflanken 23, 27 im Bereich 29 unter einem Winkel von etwa 0 bis 16°, zueinander verlaufen.

Die Winkel werden dabei durch Anlegen einer Tangente in der Mitte des jeweiligen Bereiches 29 oder durch das Einsetzen einer Sekante zwischen dem Anfang und dem Ende des Bereiches 29 bestimmt. Bei gerade verzahnten Bauteilen, d.h., dass die Zahnflanken in den Bereichen zwischen den verrundeten Übergängen im Wesentlichen gerade verlaufen, kann einfach die Steigung in diesem Bereich bestimmt werden.

Der vorteilhafte Grundgedanke der Erfindung in Bezug auf die besondere Zahnform liegt auch darin, dass die während des Betriebs, d.h. Normalbetrieb und Überlastbetrieb, ineinander greifenden Flächen der Außenverzahnung 3 und der Innenverzahnung 5 gleichsinnig gekrümmt sind, so dass der Betrieb des Wellgetriebes innerhalb zulässiger Flächenpressungen an den Zahnoberflächen stattfinden kann und insbesondere bei dem Vorliegen einer tribologischen Beschichtung der Zahnflanken eine hohe Lebensdauer gewährleistet ist.

Die Maßnahmen der Erfindung weisen unter anderem den gemeinsamen Grundgedanken auf, dass durch Veränderungen in der Geometrie des Wellgetriebes der Zahneingriff gegenüber herkömmlichen Wellgetrieben so verändert wird, dass ein Trockenlauf des Wellgetriebes möglich wird.

Bezugszeichenliste

| 1 | Drehachse |
| 2 | Antriebsbauteil |
| 3 | Außenverzahnung |
| 4 | Übertragungsbauteil |
| 5 | Innenverzahnung |
| 6 | Rad |
| 7 | erstes Topfende |
| 8 | zweites Topfende |
| 9 | Lager |
| 10 | Kontur der Außenverzahnung |
| 11 | Kontur der Innenverzahnung |
| 12 | Zahnkopf der Außenverzahnung |
| 13 | Zahnkopf der Innenverzahnung |
| 14 | Fußbereich |
| 15 | Hohlwelle |
| 17 | Bereich |
| 18 | Grenzlinie |

| 20 | Kopfende der Außenverzahnung |
| 21 | Kopfende der Innenverzahnung |
| 22 | Fußbereich der Innenverzahnung |
| 23 | Zahnflanke der Außenverzahnung |
| 24 | Übergangsbereich |
| 25 | Übergang an Außenverzahnung |
| 26 | Übergang an Innenverzahnung |
| 27 | Zahnflanke der Innenverzahnung |
| 28 | Lot |
| 29 | im Normalbetrieb nichttragender Bereich |
| 30 | Bereich zur Drehmomentübertragung |
| 31 | Zahngrund |
| 32 | Symmetrieachse |
| 33 | Ausnehmung |
| 34 | Richtung der Drehachse |
| 35 | Länge Lager |
| 36 | Länge Innenverzahnung |
| 37 | Länge Außenverzahnung |
| 38 | Länge Rad |
| 39 | Ansatz |
| 40 | Grundkörper |
| 41 | Stirnfläche |

| 42 | Grenzlinie |
| $t_1$ | Wandstärke |
| $t_2$ | Wandstärke |
| $\alpha$ | Eingriffswinkel |
| $F_1$ | Kraft |
| $F_1$ | Kraft |
| $F_1$ | Kraft |
| $F_1$ | Kraft |
| $l_1$ | Länge |
| $l_2$ | Länge |
| **lges** | Länge |
| v | Strecke |
| s | Flankenspiel |
| c | Kopfspiel |
| $h_{nt}$ | Höhe nichttragender Bereich |
| m | Modul der Verzahnung |
| as | Abstand |
| $h_{FS}$ | Zahnhöhe der Außenverzahnung |

**Patentansprüche**

1. Wellgetriebe mit einer Drehachse (1), einem Antriebsbauteil (2), einem mit einer Innenverzahnung (5) versehenen Rad (6) und einem in dem Rad (6) angeordneten und mit einer Außenverzahnung (3) versehenen elastischen Übertragungsbauteil (4), wobei das Übertragungsbauteil (4) auf das Antriebsbauteil (2) aufgesteckt und durch das Antriebsbauteil (2) derart elliptisch verformt ist, dass die Außenverzahnung (3) des Übertragungsbauteils (4) in gegenüberliegenden Bereichen einer großen Ellipsenachse mit der Innenverzahnung (5) des Rades (6) in Eingriff ist, wobei das Übertragungsbauteil (4) topfförmig ausgebildet ist und wobei das Antriebsbauteil (2) im Bereich der großen Ellipsenachse an einem Lager (9) an dem Übertragungsbauteil (4) angreift, **dadurch gekennzeichnet, dass** das Übertragungsbauteil (4) von einem die Außenverzahnung (3) aufweisenden ersten Topfende (7) zu einem zweiten Topfende konisch zusammenläuft, wobei eine Kontur (11) der Innenverzahnung (5) des Rades (6) und eine Kontur (10) der Außenverzahnung (3) des Übertragungsbauteils (4) derart ausgestaltet sind, dass ein Bereich (30) zur Drehmomentübertragung im Normalbetrieb am Zahnkopf (12) der Kontur (10) der Außenverzahnung (3) des Übertragungsbauteils (4) angeordnet ist, sodass in einem im Normalbetrieb nichttragenden Bereich (29) kein Kontakt der beiden Konturen (10, 11) im Fußbereich (14) der Kontur (10) der Außenverzahnung (3) vorliegt, wobei die Kontur (11) der Innenverzahnung (5) des Rades (6) und die Kontur (10) der Außenverzahnung (3) des Übertragungsbauteils (4) derart ausgestaltet sind, dass der Bereich zur Drehmomentübertragung (30) im Überlastbetrieb am Zahnkopf (13) der Kontur (11) der Innenverzahnung (5) des Rades (6) angeordnet ist, sodass ein Kontakt der beiden Konturen (10, 11) im Fußbereich (14) der Kontur (10) der Außenverzahnung (3) vorliegt.

2. Wellgetriebe nach Anspruch 1, **dadurch gekennzeichnet, dass** das Lager (9) außerhalb einer Projektion der Innenverzahnung (5) des Rades (6) senkrecht zur Richtung der Drehachse (1) des Wellgetriebes liegt.

3. Wellgetriebe nach Anspruch 2, **dadurch gekennzeichnet, dass** das Antriebbauteil (2) außerhalb einer Projektion der Innenverzahnung des Rades (6) senkrecht zur Richtung der Drehachse (1) des Wellgetriebes liegt.

4. Wellgetriebe nach Anspruch 2 oder 3, **dadurch gekennzeichnet, dass** das Übertragungsbauteil (4) eine Wandstärke ($t_2$) und im unmontierten Zustand im Bereich der Außenverzahnung (3) einen Innendurchmesser aufweist, wobei das Verhältnis des Innendurchmessers zu der Wandstärke ($t_2$) kleiner 0,007 ist.

5. Wellgetriebe nach einem der vorhergehenden Ansprüche, **dadurch gekennzeichnet, dass** das Lager (9) eine größere Länge (35) in Richtung (34) der Drehachse (1) aufweist als die Innenverzahnung (5) des Rades (6) oder das Rad (6) selbst.

6. Wellgetriebe nach einem der vorhergehenden Ansprüche, **dadurch gekennzeichnet, dass** das Rad (6) eine ringförmige Ausnehmung (33) aufweist, durch welche die Länge (36) der Innenverzahnung (5) in Richtung (34) der Drehachse (1) kleiner ausgebildet ist als die Gesamtlänge (38) des Rades (6) in Richtung (34) der Drehachse (1).

7. Wellgetriebe nach einem der vorhergehenden Ansprüche, **dadurch gekennzeichnet, dass** die Innenverzahnung (5) in Richtung (34) der Drehachse (1) eine kleinere Länge (36) aufweist als die Länge (37) der Außenverzahnung (3) des Übertragungsbauteils (4).

8. Wellgetriebe nach einem der vorhergehenden Ansprüche, **dadurch gekennzeichnet, dass** eine Symmetrieachse (32) des Lagers (9) außerhalb der Projektion der Innenverzahnung (5) des Rades (6) liegt.

9. Wellgetriebe nach einem der vorhergehenden Ansprüche, **dadurch gekennzeichnet, dass** die Kontur (10) der Außenverzahnung (3) des Übertragungsbauteils (4) und/oder die Kontur (11) der Innenverzahnung (5) des Rades (6) derart ausgebildet ist/sind, dass der Zahnkopf (12, 13) der jeweiligen Kontur (11, 12) abgeflacht ist.

10. Wellgetriebe nach einem der vorhergehenden Ansprüche, **dadurch gekennzeichnet, dass** die Außenverzahnung (3) des Übertragungsbauteils (4) und/oder die Innenverzahnung (5) des Rades (6) wenigstens im Bereich ihrer während des Betriebs des Wellgetriebes in Kontakt stehenden Zahnflanken (23, 27) mit einer tribologisch wirksamen Beschichtung, insbesondere ein mit Wolframcarbit verstärktes Molybdändisulfid ($MoS_2$/WC) versehen ist.

11. Wellgetriebe nach einem der vorhergehenden Ansprüche, **dadurch gekennzeichnet, dass** ein Eingriffswinkel ($\alpha_1$) von größer oder gleich 25° gegeben ist, insbesondere im Bereich des Zahnkopfes (12) der Außenverzahnung (3).

12. Wellgetriebe nach einem der vorhergehenden Ansprüche, **dadurch gekennzeichnet, dass** sich im Überlastbetrieb die in Eingriff miteinander stehenden Zähne der Innenverzahnung (5) und der Außenverzahnung (3) derart verformen, dass ein Eingriff der Zähne an deren Zahnflanken (23, 27) sowohl am jeweiligen Zahnkopf (12, 13) als auch am jeweiligen Fußbereich (14, 22) vorliegt.

13. Wellgetriebe nach einem der vorhergehenden Ansprüche, **dadurch gekennzeichnet, dass** die Kontur (10) der Außenverzahnung (3) sowie die Kontur (11) der Innenverzahnung (5) derart ausgebildet sind, dass die Zahnflanken (23) der Außenverzahnung (3) im Bereich des Zahnkopfes (12) sowie die Zahnflanken (27) der Innenverzahnung (5) in deren Fußbereich (22) jeweils unter einem größeren ($\alpha_1$) Winkel zum Lot (28) verlaufen als der dazu korrespondierende Fußbereich (14) der Zahnflanke (23) der Außenverzahnung (3) bzw. der Bereich des Zahnkopfes (13) der Zahnflanke (27) der Innenverzahnung (5).

14. Wellgetriebe nach Anspruch 13, **dadurch gekennzeichnet, dass** die Zahnflanken (23) der Außenverzahnung (3) im Fußbereich (14) unter einem kleineren Winkel zum Lot (28) als die Zahnflanken (27) der Innenverzahnung (5) im Bereich des Zahnkopfes (13) verlaufen, vorzugsweise im Bereich von größer 0° bis 16°.

15. Wellgetriebe nach einem der vorhergehenden Ansprüche 13 oder 14, **dadurch gekennzeichnet, dass** die Zahnflanken (23) der Außenverzahnung (3) im Fußbereich (14) unter einem Winkel ($\alpha_2$) im Bereich von 6° bis 12° zum Lot (28) verlaufen.

16. Wellgetriebe nach einem der vorhergehenden Ansprüche 13 bis 15, **dadurch gekennzeichnet, dass** die Zahnflanken (27) der Innenverzahnung (5) im Bereich des Zahnkopfes (13) unter einem Winkel ($\alpha_3$) im Bereich von 12° bis 22° zum Lot (28) verlaufen.

**17.** Wellgetriebe nach einem der vorhergehenden Ansprüche, **dadurch gekennzeichnet, dass** der im Normalbetrieb nichttragende Bereich (29) der Zahnflanke (23) der Außenverzahnung (3) in Richtung des Lots (28) eine Höhe ($h_{nt}$) aufweist, die das 0,25-fache bis 0,8-fache, vorzugsweise das 0,45-fache bis 0,75-fache einer Zahnhöhe ($h_{FS}$) beträgt.

**18.** Wellgetriebe nach einem der vorhergehenden Ansprüche, **dadurch gekennzeichnet, dass** der im Normalbetrieb nichttragende Bereich (29) der Zahnflanke (27) der Innenverzahnung (5) und der im Normalbetrieb nichttragende Bereich (29) der Zahnflanke (23) der Außenverzahnung (3) um ein Flankenspiel (s) beabstandet ist, welches in einem Abstand (as) von einem Zahngrund (31) maximal das 0,35-fache, vorzugsweise maximal das 0,3-fache eines Moduls der Verzahnung (m) beträgt, wobei der Abstand (as) vom Zahngrund (31) das 1,5-fache des Abstands zwischen dem Zahngrund (31) und dem Kopfende (21) der Innenverzahnung (5) beträgt.

**19.** Wellgetriebe nach einem der vorhergehenden Ansprüche, **dadurch gekennzeichnet, dass** der im Normalbetrieb nichttragende Bereich (29) und der Bereich zur Drehmomentübertragung (30) der Zahnflanke (27) der Innenverzahnung (5) und der im Normalbetrieb nichttragende Bereich (29) und der Bereich zur Drehmomentübertragung (30) der Zahnflanke (23) der Außenverzahnung (3) durch gleichsinnig gekrümmte Übergänge miteinander verbunden sind, so dass sich beim Übergang vom Normalbetrieb in den Überlastbetrieb die jeweiligen Zahnflanken (23, 27) im nichttragenden Bereich (29) sukzessive aneinanderschmiegen.

**20.** Getriebeeinbausatz mit einem Wellgetriebe nach einem der vorhergehenden Ansprüche.

**Claims**

**1.** Harmonic drive with a rotational axis (1), a drive element (2), a wheel (6) provided with an internal toothing (5), and an elastic transmission component (4) that is arranged inside the wheel (6) and provided with an external toothing (3), wherein the transmission component (4) is plugged onto the drive element (2) and is elliptically deformed by the drive element (2) in such a manner that the external toothing (3) of the transmission component (4) is in mesh with the internal toothing (5) of the wheel (6) in opposing areas of a major ellipse axis, wherein the transmission component (4) is embodied in a cup-shaped manner, and wherein the drive element (2) engages at a bearing (9) at the transmission component (4) in the area of the major ellipse axis, **characterized in that** the transmission component (4) conically converges from a first cup end (7) comprising the external toothing (3) towards a second cup end (8), wherein a contour (11) of the internal toothing (5) of the wheel (6) and a contour (10) of the external toothing (3) of the transmission component (4) are designed in such a manner that the area (30) for torque transmission is arranged at the tooth head (12) of the contour (10) of the external toothing (3) of the transmission component (4) during normal operation, so that in an area (29) that is non-loadbearing during normal operation no contact of the two contours (10, 11) occurs in the base area (14) of the contour (10) of the external toothing (3), wherein the contour (11) of the internal toothing (5) of the wheel (6) and the contour (10) of the external toothing (3) of the transmission component (4) are designed in such a manner that the area for torque transmission (30) is arranged at the tooth head (13) of the contour (11) of the internal toothing (5) of the wheel (6) in overload operation, so that a contact of both contours (10, 11) occurs in the base area (14) of the contour (10) of the external toothing (3).

**2.** Harmonic drive according to claim 1, **characterized in that** the bearing (9) is positioned outside of a projection of the internal toothing (5) of the wheel (6) perpendicular to the direction of the rotational axis (1) of the harmonic drive.

**3.** Harmonic drive according to claim 2, **characterized in that** the drive element (2) is positioned outside of a projection of the internal toothing of the wheel (6) perpendicular to the direction of the rotational axis (1) of the harmonic drive.

**4.** Harmonic drive according to claim 2 or 3, **characterized in that** the transmission component (4) has a wall thickness ($t_2$) and in the unmounted state has an inner diameter in the area of the external toothing (3), wherein the ratio of the inner diameter to the wall thickness ($t_2$) is less than 0.007.

**5.** Harmonic drive according to any of the preceding claims, **characterized in that** the bearing (9) has a greater length (35) in the direction (34) of the rotational axis (1) than the internal toothing (5) of the wheel (6) or the wheel (6) itself.

**6.** Harmonic drive according to any of the preceding claims, **characterized in that** the wheel (6) has a ring-shaped recess (33) through which the length (36) of the internal toothing (5) is embodied to be smaller in the direction (34) of the rotational axis (1) than the total length (38) of the wheel (6) in the direction (34) of the rotational axis (1).

7. Harmonic drive according to any of the preceding claims, **characterized in that** the internal toothing (5) has a smaller length (36) in the direction (34) of the rotational axis (1) than the length (37) of the external toothing (3) of the transmission component (4).

8. Harmonic drive according to any of the preceding claims, **characterized in that** a symmetry axis (32) of the bearing (9) is located outside of the projection of the internal toothing (5) of the wheel (6).

9. Harmonic drive according to any of the preceding claims, **characterized in that** the contour (10) of the external toothing (3) of the transmission component (4) and/or the contour (11) of the internal toothing (5) of the wheel (6) is/are embodied in such a manner that the tooth head (12, 13) of the respective contour (11, 12) is levelled.

10. Harmonic drive according to any of the preceding claims, **characterized in that** the external toothing (3) of the transmission component (4) and/or the internal toothing (5) of the wheel (6) are provided with a tribologically active coating, in particular a molybdenum disulfide ($MoS_2$/WC) reinforced with tungsten carbide, at least in the area of their tooth flanks (23, 27) that are in contact with each other during operation of the harmonic drive.

11. Harmonic drive according to any of the preceding claims, **characterized in that** a pressure angle ($\alpha_1$) that is greater or equal to 25° is present, in particular in the area of the tooth head (12) of the external toothing (3).

12. Harmonic drive according to any of the preceding claims, **characterized in that** the teeth of the internal toothing (5) and the external toothing (3) that are in mesh with each other in overload operation are deformed in such a manner that a mesh of the teeth at their tooth flanks (23, 27) occurs at the respective tooth head (12, 13) as well as at the respective base area (14, 22).

13. Harmonic drive according to any of the preceding claims, **characterized in that** the contour (10) of the external toothing (3) as well as the contour (11) of the internal toothing (5) are embodied in such a manner that the tooth flanks (23) of the external toothing (3) in the area of the tooth head (12) as well as the tooth flanks (27) of the internal toothing (5) in its base area (22) respectively extend at a larger ($\alpha_1$) angle to the perpendicular (28) than the base area (14) of the tooth flank (23) of the external toothing (3) corresponding thereto, or the area of the tooth head (13) of the tooth flank (27) of the internal toothing (5).

14. Harmonic drive according to claim 13, **characterized in that** the tooth flanks (23) of the external toothing (3) in the base area (14) extend at a smaller angle to the perpendicular (28) than the tooth flanks (27) of the internal toothing (5) in the area of the tooth head (13), preferably in the range of greater than 0° to 16°.

15. Harmonic drive according to any of the preceding claims 13 or 14, **characterized in that** the tooth flanks (23) of the external toothing (3) in the base area (14) extend at an angle ($\alpha_2$) in the range of 6° to 12° to the perpendicular (28).

16. Harmonic drive according to any of the preceding claims 13 to 15, **characterized in that** the tooth flanks (27) of the internal toothing (5) in the area of the tooth head (13) extend at an angle ($\alpha_3$) in the range of 12° to 22° to the perpendicular (28).

17. Harmonic drive according to any of the preceding claims, **characterized in that** the area (29) of the tooth flank (23) of the external toothing (3) that is non-loadbearing during normal operation has a height ($h_{nt}$) in the direction of the perpendicular (28), which corresponds to 0.25 times to 0.8 times, preferably 0.45 times to 0.75 times a tooth height ($h_{FS}$).

18. Harmonic drive according to any of the preceding claims, **characterized in that** the area (29) of the tooth flank (27) of the internal toothing (5) that is non-loadbearing during normal operation, and the area (29) of the tooth flank (23) of the external toothing (3) that is non-loadbearing during normal operation is arranged at a distance by a flank clearance (s), which is maximally 0.35 times, preferably maximally 0.3 times of a module of the toothing (m) at a distance ($a_s$) from a tooth base (31), wherein the distance (as) from the tooth base (31) is 1.5 times the distance between the tooth base (31) and the head end (21) of the internal toothing (5).

19. Harmonic drive according to any of the preceding claims, **characterized in that** the area (29) that is non-loadbearing during the normal operation and the area for torque transmission (30) of the tooth flank (27) of the internal toothing (5) and the area (29) that is non-loadbearing during normal operation and the area for torque transmission (30) of the tooth flank (23) of the external toothing (3) are connected to each other by transitions that are curved in the same direction, so that the respective tooth flanks (23, 27) successively nestle against one another in the non-loadbearing area (29) during transition from normal operation to overload operation.

20. Gear installation kit with a harmonic drive according to any of the preceding claims.

**Revendications**

1. Transmission d'arbre présentant un axe de rotation (1), un composant d'entraînement (2), une roue (6) dotée d'une denture intérieure (5) et un composant élastique de transmission (4) disposé dans la roue (6) et doté d'une denture extérieure (3),
   le composant de transmission (4) étant enfiché sur le composant d'entraînement (2) et étant déformé elliptiquement par le composant d'entraînement (2) de telle sorte que la denture extérieure (3) du composant de transmission (4) engage des parties mutuellement opposées d'un grand axe de l'ellipse avec la denture intérieure (5) de la roue (6),
   le composant de transmission (4) étant configuré en forme de chapeau et
   le composant d'entraînement (2) engageant un palier (9) du composant de transmission (4) dans la région du grand axe de l'ellipse,
   **caractérisée en ce que**
   le composant de transmission (4) converge coniquement vers une deuxième extrémité du chapeau depuis une première extrémité (7) du chapeau qui présente la denture extérieure (3),
   un contour (11) de la denture intérieure (5) de la roue (6) et un contour (10) de la denture extérieure (3) du composant de transmission (4) sont configurés de telle sorte qu'une partie (30) destinée à transmettre un couple de rotation soit disposée en fonctionnement normal sur la tête (12) des dents du contour (10) de la denture extérieure (3) du composant de transmission (4) de telle sorte que dans une partie (29) non portante en fonctionnement normal, il n'y ait aucun contact entre les deux contours (10, 11) au niveau du pied (14) du contour (10) de la denture extérieure (3),
   le contour (11) de la denture intérieure (5) de la roue (6) et le contour (10) de la denture extérieure (3) du composant de transmission (4) sont configurés de telle sorte qu'en cas de fonctionnement en surcharge, la région menant à la transmission d'un couple de rotation (30) soit située sur la tête (13) des dents du contour (11) de la denture intérieure (5) de la roue (6) de telle sorte qu'il existe un contact entre les deux contours (10, 11) au niveau du pied (14) du contour (10) de la denture extérieure (3).

2. Transmission d'arbre selon la revendication 1, **caractérisée en ce qu'**à l'extérieur d'une projection de la denture intérieure (5) de la roue (6), le palier (9) est disposé perpendiculairement à la direction de l'axe de rotation (1) de la transmission d'arbre.

3. Transmission d'arbre selon la revendication 2, **caractérisée en ce qu'**à l'extérieur d'une projection de la denture intérieure de la roue (6), le composant d'entraînement (2) est disposé perpendiculairement à la direction de l'axe de rotation (1) de la transmission d'arbre.

4. Transmission d'arbre selon les revendications 2 ou 3, **caractérisée en ce que** le composant de transmission (4) présente une paroi d'épaisseur ($t_2$) et, à l'état non monté, présente un diamètre intérieur au niveau de la denture extérieure (3), le rapport entre le diamètre intérieur et l'épaisseur ($t_2$) de la paroi étant inférieur à 0,007.

5. Transmission d'arbre selon l'une des revendications précédentes, **caractérisée en ce que** le palier (9) présente dans la direction (34) de l'axe de rotation (1) une longueur (35) supérieure à la denture intérieure (5) de la roue (6) ou à la roue (6) proprement dite.

6. Transmission d'arbre selon l'une des revendications précédentes, **caractérisée en ce que** la roue (6) présente une découpe annulaire (33) qui raccourcit la longueur (36) de la denture intérieure (5) dans la direction (34) de l'axe de rotation (1) par rapport à la longueur totale (38) de la roue (6) dans la direction (34) de l'axe de rotation (1).

7. Transmission d'arbre selon l'une des revendications précédentes, **caractérisée en ce que** dans la direction (34) de l'axe de rotation (1), la denture intérieure (5) présente une longueur (36) plus petite que la longueur (37) de la denture extérieure (3) du composant de transmission (4).

8. Transmission d'arbre selon l'une des revendications précédentes, **caractérisée en ce que** l'axe de symétrie (32) du palier (9) est situé à l'extérieur de la projection de la denture intérieure (5) de la roue (6).

9. Transmission d'arbre selon l'une des revendications précédentes, **caractérisée en ce que** le contour (10) de la denture extérieure (3) du composant de transmission (4) et/ou le contour (11) de la denture intérieure (5) de la roue (6) sont configurés de telle sorte que les têtes (12, 13) des dents de chaque contour (11, 12) sont aplaties.

10. Transmission d'arbre selon l'une des revendications précédentes, **caractérisée en ce qu'**au moins au niveau des flancs (23, 27) des dents en contact lorsque la transmission d'arbre est en fonctionnement, la denture extérieure (3) du composant de transmission (4) et/ou la denture intérieure (5) de la roue (6) sont dotées d'un revêtement à action tribologique, en particulier un sulfure de molybdène renforcé de carbure de tungstène ($MoS_2$/WC).

11. Transmission d'arbre selon l'une des revendications précédentes, **caractérisée en ce que** l'angle d'engagement ($\alpha_1$) est supérieur ou égal à 25°, en particulier au niveau des têtes (12) des dents de la denture extérieure (3).

12. Transmission d'arbre selon l'une des revendications précédentes, **caractérisée en ce qu'**en fonctionnement en surcharge, les dents engagées l'une sur l'autre de la denture intérieure (5) et de la denture extérieure (3) se déforment de telle sorte que les dents s'engrènent par leurs flancs (23, 27) à la fois sur chaque tête (12, 13) de dent et sur leur partie de pied (14, 22).

13. Transmission d'arbre selon l'une des revendications précédentes, **caractérisée en ce que** le contour (10) de la denture extérieure (3) et le contour (11) de la denture intérieure (5) sont configurés de telle sorte que les flancs (23) des dents de la denture extérieure (3) au niveau des têtes (12) des dents ainsi que les flancs (27) des dents de la denture intérieure (5) au niveau de leur partie de pied (22) forment par rapport à la normale (28) un angle $(\alpha_1)$ plus grand que la partie de pied (14) correspondante des flancs (23) des dents de la denture extérieure (3) ou du niveau des têtes (13) des flancs (27) des dents de la denture intérieure (5).

14. Transmission d'arbre selon la revendication 13, **caractérisée en ce qu'**au niveau du pied (14), les flancs (23) des dents de la denture extérieure (3) forment par rapport à la normale (28) un angle plus petit que les flancs (27) des dents de la denture intérieure (5) au niveau de la tête (13) des dents, l'angle étant de préférence compris entre plus que 0° et 16°.

15. Transmission d'arbre selon l'une des revendications 13 et 14 qui précèdent, **caractérisée en ce qu'**au niveau du pied (14), les flancs (23) des dents de la denture extérieure (3) forment avec la normale (28) un angle $(\alpha_2)$ compris dans la plage de 6° à 12°.

16. Transmission d'arbre selon l'une des revendications 13 à 15 qui précèdent, **caractérisée en ce qu'**au niveau de la tête (13) des dents, les flancs (27) des dents de la denture intérieure (5) avec la normale (28) un angle $(\alpha_3)$ compris dans la plage de 12° à 22°.

17. Transmission d'arbre selon l'une des revendications précédentes, **caractérisée en ce que** la partie (29) des flancs (23) de la denture extérieure (3) qui n'est pas portante en fonctionnement normal présente dans la direction de la verticale (28) une hauteur $(h_{nt})$ qui représente de 0,25 fois à 0,8 fois et de préférence de 0,45 fois à 0,75 fois la hauteur d'une dent $(h_{FS})$.

18. Transmission d'arbre selon l'une des revendications précédentes, **caractérisée en ce que** la partie (29) des flancs (27) des dents de la denture intérieure (5) qui n'est pas portante en fonctionnement normal et la partie (29) des flancs (23) des dents de la denture extérieure (3) qui n'est pas portante en fonctionnement normal présente entre flancs un jeu (s) qui, à une distance $(a_s)$ du fond (31) des dents, représente au plus 0,35 fois et de préférence au plus 0,3 fois un module de la denture (m), la distance $(a_s)$ par rapport au fond de dent (31) représentant 1,5 fois la distance entre le fond (31) des dents et l'extrémité (21) des têtes de la denture intérieure (5).

19. Transmission d'arbre selon l'une des revendications précédentes, **caractérisée en ce que** la partie (29) non portante en fonctionnement normal et la partie servant à la transmission (30) d'un couple de rotation des flancs (27) des dents de la denture intérieure (5) ainsi que la partie (29) non portante en fonctionnement normal et la partie servant à la transmission (30) d'un couple de rotation des flancs (23) des dents de la denture extérieure (3) sont reliées l'une à l'autre par des transitions incurvées dans le même sens, de telle sorte que lors du passage du fonctionnement normal au fonctionnement en surcharge, les différents flancs (23, 27) des dents s'épousent mutuellement et successivement dans la partie non portante (29).

20. Module de transmission présentant une transmission d'arbre selon l'une des revendications précédentes.

Fig.1

Fig. 2

Fig. 3

Fig.4

12

13,14

11

10

α

Fig. 5

17

10

Fig. 6

Fig.7

# Fig. 8

Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004034823 A1
- DD 244796 A1
- DE 102008044109 A1
- JP S59113341 A
- SU 484335 A1
- JP S60231047 A
- US 6526849 B1